# FASCICULE DE BREVET EUROPEEN

(11) **EP 0 720 515 B1**
(45) Date de publication et mention de la délivrance du brevet: **28.05.1997**
(21) Numéro de dépôt: 94929587.7
(22) Date de dépôt: 06.10.1994
(51) Int. Cl.: B05B 13/04, B23Q 11/08

(54) **DISPOSITIF DE PROJECTION DE PRODUIT DE REVETEMENT FORMANT MACHINE DE TOIT OU MACHINE LATERALE**
VORRICHTUNG ZUM ÜBERKOPFSPRÜHEN ODER SEITLICHEN SPRÜHEN VON BESCHICHTUNGSMITTEL
COATING PRODUCT PROJECTING DEVICE FORMING AN OVERHEAD MACHINE OR SIDE-MOUNTED MACHINE

(30) Priorité: 06.10.1993 FR 9311901; 07.01.1994 FR 9400127
(43) Date de publication de la demande: 10.07.1996
(73) Titulaire: SAMES S.A., F-38240 Meylan (FR)
(72) Inventeur: EHINGER, Pierre, F-74210 Faverges (FR); LAMBINET, Gilles, F-38240 Meylan (FR); PHAM, Van Tan, F-38190 Villard Bonnot (FR); RODRIGUES, José, F-38450 Vif (FR); THOME, Caryl, F-38120 Saint-Egrève (FR)
(74) Mandataire: Myon, Gérard Jean-Pierre
(86) Numéro de dépôt international: FR9401168
(87) Numéro de publication internationale: WO9509697

(56) Documents cités:
- US-A- 3 415 131
- US-A- 4 882 881
- US-A- 5 067 285

## Description

L'invention concerne un dispositif de projection de produit de revêtement, sous forme liquide ou pulvérulente, formant machine de toit ou machine latérale. Elle concerne plus particulièrement un système d'entraînement de la poutre ou du bras d'un projecteur d'une telle machine, dans ses mouvements d'altitude et de suivi latéral des objets à revêtir.

Dans les machines de toit connues, une poutre est rendue solidaire de deux caissons au moyen de paliers permettant un mouvement de rotation de la poutre autour de son plus grand axe. Ces caissons, mobiles verticalement, sont en appui simple sur des portiques. Cette structure relativement complexe nécessite de dimensionner de manière très précise les articulations de l'ensemble poutre-caissons-portique, sous peine d'entraîner le fléchissement de la structure. De plus, les caissons, qui contiennent certains éléments moteurs et s'étendent sur toute la longueur du suivi latéral des objets à peindre, que peut parcourir la poutre, sont lourds et volumineux. Ils perturbent sensiblement la ventilation de la cabine de revêtement et donc la qualité de l'application de ce revêtement. Les dimensions des caissons dépendent de la course de la poutre, c'est-à-dire des paramètres inhérents aux objets à peindre et/ou au système de convoyage de ces objets. Les caissons ont tendance à se salir car ils évoluent dans une atmosphère perturbée et chargée en particules de produit de revêtement.

En outre, l'accès, par l'intérieur de la cabine, à tous les éléments de motorisation ou d'alimentation en produit de revêtement de la poutre et des projecteurs qu'elle porte, est délicat et ne peut se faire que pendant les périodes d'arrêt de l'installation. Ces éléments sont donc d'accès difficile.

Les machines latérales connues, quant à elles, ne permettent généralement pas d'effectuer un mouvement de suivi latéral des objets à revêtir. Celles qui le permettent sont composées d'éléments complexes installés à l'intérieur de la cabine et gui perturbent la ventilation de celle-ci.

US 4.882.881 divulgue une machine de sablage dans laquelle un panneau situé au dessus des objets à traiter est constitué par des bandes suiveuses au centre desquelles se déplace un chariot entraîné par une pignonnerie.

JP 4197465 divulgue une machine de toit dans laquelle les portiques latéraux supportant une poutre sont mobiles sur des structures de portage, conformément au préambule de la revendication 1. Les portiques latéraux mobiles occupent un volume important et perturbent d'autant l'écoulement de l'air à l'intérieur de la cabine.

L'invention résout l'ensemble de ces problèmes.

Plus précisément, l'invention concerne un dispositif de protection de produit de revêtement formant machine de toit du type comportant une poutre portant au moins un projecteur mobile dans une zone de projection par rapport à des objets à recouvrir situés dans cette zone et deux portiques latéraux comportant un chariot mobile, supportant ladite poutre, du type comportant des premiers panneaux mobiles dans un plan vertical suivant une première direction pour obturer une partie d'une face dudit portique du côté de ladite zone de projection et comportant deux bords parallèles fixés de part et d'autre dudit chariot, caractérisé en ce qu'il comporte en outre des seconds panneaux mobiles sensiblement dans le même plan et se déplaçant suivant une seconde direction perpendiculaire à ladite première direction pour obturer une autre partie de ladite face dudit portique s'étendant entre lesdits bords parallèles desdits premiers panneaux et en ce que l'ensemble desdits panneaux forme une partie de la cloison d'une cabine de revêtement.

L'invention concerne aussi un dispositif de projection de produit de revêtement formant machine latérale du type comportant un élément portant au moins un projecteur mobile dans une zone de projection par rapport à des objets à recouvrir situés dans cette zone et un portique latéral comportant un chariot mobile, supportant ledit élément, du type comportant des premiers panneaux mobiles dans un plan vertical suivant une première direction pour obturer une partie d'une face dudit portique du côté de ladite zone de projection et comportant deux bords parallèles fixés de part et d'autre dudit chariot, et, en outre, des seconds panneaux mobiles sensiblement dans le même plan et se déplaçant suivant une seconde direction, perpendiculaire à ladite première direction pour obturer une autre partie de ladite face dudit portique s'étendant entre lesdits bords parallèles desdits premiers panneaux, l'ensemble desdits panneaux formant une partie de la cloison d'une cabine de revêtement.

De cette façon, il est possible de concevoir une installation dans laquelle l'ensemble des panneaux précités forme une partie de la cloison d'une cabine de revêtement délimitant ladite zone de projection. Grâce à cet agencement, les projecteurs peuvent se déplacer dans la cabine sans perturber de façon notable la ventilation et la plus grande partie des systèmes d'alimentation en produit de revêtement et des moyens de motorisation se trouve placée à l'extérieur de la cabine, c'est-à-dire dans des zones accessibles même pendant les périodes de fonctionnement de l'installation. Ces panneaux ou au moins certains d'entre eux peuvent être en matériau transparent ce qui facilite le contrôle visuel du bon fonctionnement de l'installation. La mobilité des panneaux favorise leur nettoyage même pendant les phases de projection du produit de revêtement puisque les moyens de nettoyage peuvent être des dispositifs disposés au contact desdits panneaux et nettoyant ceux-ci en permanence lorsqu'ils se déplacent. Les machines situées à l'extérieur de la cabine ne perturbent pas l'écoulement de l'air, ce qui permet d'obtenir un état de surface satisfaisant, notamment sur les faces planes des objets à recouvrir, comme par exemple le toit, le capot ou les portes d'une carrosserie automobile. L'accès aux éléments de motorisation ou d'alimentation en produit de revêtement se fait par l'extérieur de la cabine.

Dans le cas d'une machine de toit, l'invention améliore aussi la cinématique de la machine. Il est en effet possible d'éviter la flexion de la poutre installée entre deux portiques situés de part et d'autre de la cabine. La poutre peut en effet traverser la paroi de la cabine et être en appui, non plus en bout, mais sur une partie intermédiaire de sa longueur. De plus, au moins une partie des éléments de motorisation du ou des pulvérisateurs peut être déportée à l'extérieur de la poutre, ce qui permet de l'alléger, d'en réduire la section et d'en améliorer l'aérodynamisme. Enfin, les conduits d'alimentation en produit de revêtement ne risquent pas d'être exagérément pliés aux extrémités de la poutre, selon des coudes de faibles rayons de courbure, puisque ces extrémités sont situées à l'extérieur de la cabine où on dispose de plus d'espace. On réduit de cette façon les pertes de charge dans ces conduits et on minimise les risques d'écrasement et de détérioration des tuyaux.

Dans le cas d'une machine latérale, l'invention permet de doter les projecteurs de cinq degrés de liberté, pour adapter leur course à des objets de forme complexe ou peindre des objets à l'arrêt sur un convoyeur, d'où un gain de place et de temps important. Les avantages liés à la ventilation de la cabine et à l'accessibilité, décrits en relation avec le cas d'une machine de toit, demeurent valables.

Grâce à l'invention, tous les éléments sur lesquels influe la course de la poutre ou des projecteurs sont situés hors de la cabine: il est donc facile de définir une installation en fonction de la forme des objets à peindre. L'invention permet donc une meilleure normalisation des installations.

Selon un mode de réalisation préféré, lesdits seconds panneaux coulissent dans la largeur desdits premiers panneaux entre les bords parallèles précités de ceux-ci. Dans bon nombre de cas, ces panneaux sont constitués par des bandes souples qui s'enroulent et sont guidées autour de rouleaux perpendiculaires à leur direction de déplacement, respectivement.

Selon certains modes de réalisation, les panneaux sont des bandes souples constituant des moyens de transmission de mouvement. Ainsi, lesdits premiers panneaux, réalisés sous forme de bandes souples, peuvent être interposés entre des moyens moteurs et des rails entre lesquels se déplacent lesdits seconds panneaux. Ces derniers, également réalisés en bandes souples peuvent aussi constituer des moyens de transmission de mouvement mécaniquement interposés entre d'autres moyens moteurs et ledit chariot supportant ledit élément.

Dans d'autres modes de réalisation, le dispositif comporte des liens souples tels que des courroies, câbles, chaînes ou analogues qui constituent des moyens de transmission de mouvement, le rôle des panneaux se limitant alors à celui de parties de paroi mobiles empêchant la pollution des équipements situés dans le portique par le produit de revêtement provenant de la cabine. On peut ainsi prévoir de tels liens souples mécaniquement interposés entre des moyens moteurs et des rails entre lesquels se déplacent les seconds panneaux, les liens souples jouxtant lesdits premiers panneaux au moins au voisinage du plan précité où ils se déplacent. De même, au moins un lien souple de même nature peut constituer des moyens de transmission de mouvement mécaniquement interposés entre d'autres moyens moteurs et ledit chariot supportant ledit élément, ce lien souple jouxtant lesdits seconds panneaux au moins au voisinage du plan précité où ils se déplacent.

Avec l'agencement décrit ci-dessus comprenant deux ensembles de bandes étanches et souples et un chariot mobile permettant le déplacement d'une poutre ou d'un support de pulvérisateur, les bandes qui forment une partie de la cloison de la cabine de revêtement sont nettoyées par tout moyen adapté comme par exemple une raclette ou une rampe d'aspiration, éventuellement complétée par une barre de dépôt de produit anti-adhérent.

Dans le cas où le chariot est déplacé par un ensemble de liens souples jouxtant les panneaux, il est possible de faire effectuer une boucle quasi-complète à certains liens dans le portique, sans pour autant interdire l'accès au chariot par l'arrière dudit portique. Pour ce faire, les liens ne sont pas recouverts par les panneaux d'étanchéité au voisinage du contrepoids opposé au chariot. Ceci n'est en effet pas nécessaire puisque le contrepoids est situé du côté opposé à celui des objets à revêtir dans le portique; le produit de revêtement pulvérisé ne risque pas de traverser l'espace intérieur du portique en raison de la paroi mobile définie par l'ensemble des panneaux. La tension desdits liens souples est améliorée par la présence du contrepoids qui équilibre sensiblement le chariot et l'ensemble des éléments déplaçables. L'entraînement s'en trouve facilité.

Selon un mode de réalisation, on utilise deux liens souples espacés latéralement le long d'une face avant du portique, dans un plan parallèle au trajet des objets à recouvrir; il est possible de rendre le contrepoids solidaire de ces deux liens. Il en résulte une bonne stabilité de l'ensemble et un meilleur entraînement des éléments mobiles.

Enfin, la vitesse de déplacement de l'élément portant les projecteurs est directement proportionnelle à la vitesse de rotation des moteurs d'entraînement car les liens de traction forment une ou plusieurs boucles fermées qui s'étendent principalement le long de parois internes du portique fixe, sans s'enrouler autour d'un rouleau d'entraînement dont le diamètre varierait en fonction de la longueur déjà enroulée.

L'invention sera mieux comprise et d'autres avantages de celle-ci apparaîtront plus clairement à la lumière de la description qui va suivre de plusieurs modes de réalisation de dispositifs de projection de produit de revêtement conforme à son principe, donnée uniquement à titre d'exemple et faite en référence aux dessins annexés dans lesquels:
- la figure 1 est une vue schématique partielle en coupe d'une machine de toit selon l'invention;
- la figure 2 est une vue schématique partielle en perspective d'un portique latéral de la machine de toit de la figure 1;
- la figure 3 est une vue schématique partielle en perspective d'une machine latérale conforme à l'invention;
- la figure 4 est une vue schématique partielle en perspective d'un autre portique d'une machine de toit conforme à l'invention;
- la figure 5 est une vue schématique partielle en perspective d'une autre machine latérale conforme à l'invention; et
- la figure 6 est une vue schématique analogue à la figure 4 illustrant une variante d'un portique d'une machine de toit conforme à l'invention.

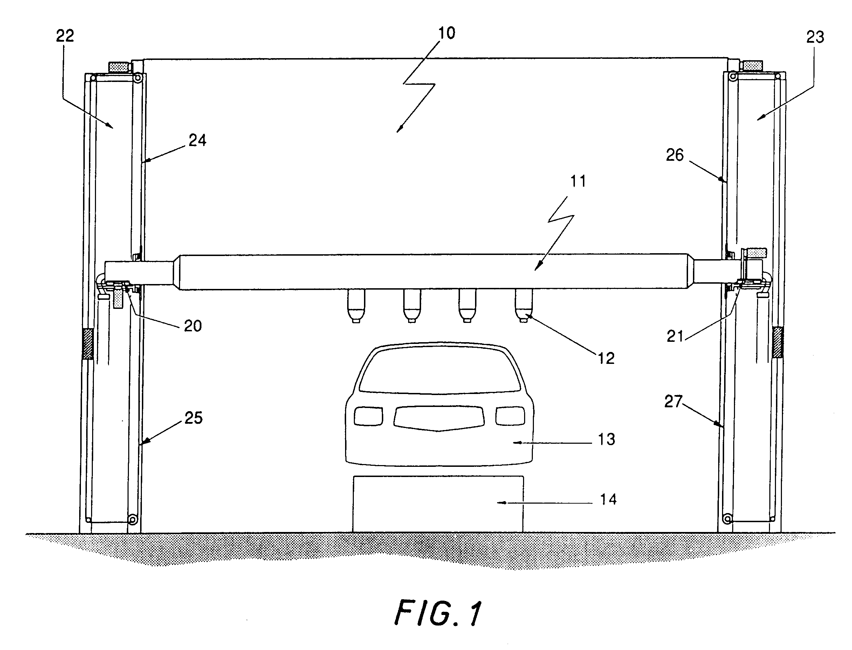

La machine de toit de la figure 1 fonctionne à l'intérieur d'une cabine 10 de pulvérisation de produit de revêtement et comporte une poutre 11 portant quatre projecteurs 12 permettant d'appliquer un produit de revêtement sur les parties essentiellement horizontales, ainsi que les faces avant et arrière, d'un objet tel que par exemple une carrosserie de véhicule automobile 13 portée par un convoyeur 14.

La poutre 11 est portée par deux chariots 20, 21 qui sont équipés de moyens permettant des mouvements de rotation et de balayage de celle-ci entre deux portiques 22 et 23. Les chariots sont supportés par des premiers panneaux mobiles constitués par des premières bandes souples 24, 25, 26 et 27. Ils sont séparés de la cabine par lesdites bandes souples et évoluent dans le portique. Ainsi, la poutre 11 débouche du côté des bandes 24 à 27 opposées à l'espace intérieur de la cabine. La poutre peut être de section relativement faible car on peut éviter son fléchissement malgré le poids des pulvérisateurs 12 en chargeant ses extrémités situées à l'intérieur des portiques. Cette faible section permet de réduire les perturbations de la ventilation dans la cabine 10 au voisinage des projecteurs 12. On rappelle que des moyens de ventilation sont prévus dans la cabine 10 pour faire circuler un courant d'air stable, verticalement de haut en bas.

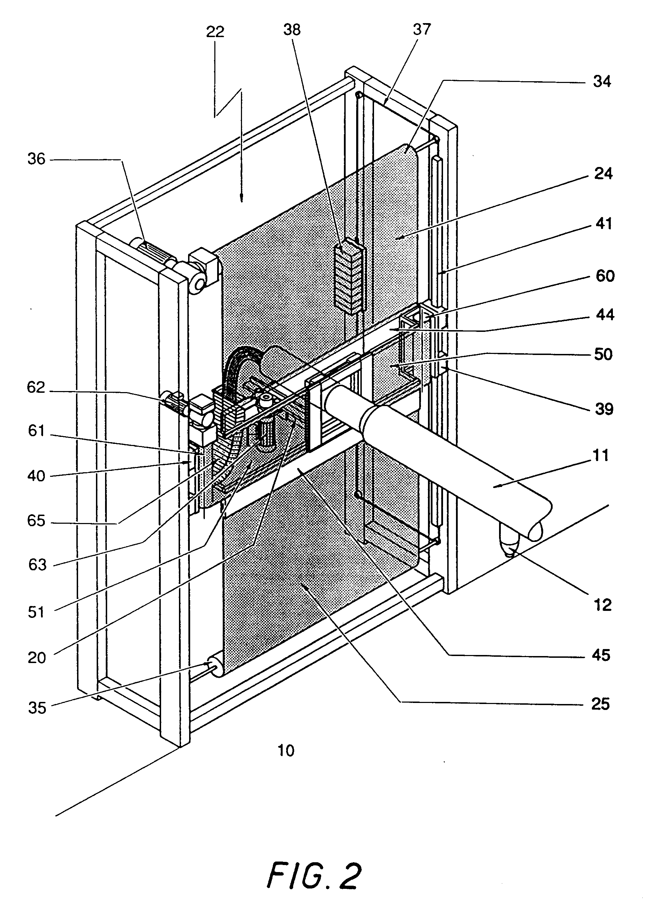

La figure 2 est une vue schématique partielle du portique 22 et d'une extrémité de la poutre 11 où un projecteur 12 est visible. Les bandes souples 24 et 25 sont respectivement susceptibles de s'enrouler autour de rouleaux 34 et 35, respectivement situés à la partie supérieure et à la partie inférieure du portique, en fonction des mouvements d'altitude, c'est-à-dire des déplacements verticaux du chariot 20. Ces mouvements sont pilotés grâce à un moteur électrique 36 couplé au rouleau 34. Un système à câble 37 et contrepoids 38 reporte les efforts de l'une des bandes sur l'autre et garantit une bonne tension et un équilibrage convenable de l'ensemble. Un moteur électrique de faible puissance, non représenté, est couplé au rouleau 35 pour maintenir la bande 25 en légère tension dans son propre plan.

Des chariots de guidage vertical 39 et 40 sont montés mobiles le long de rails 41 fixés le long des montants du portique situé du côté de la cabine. Ces chariots de guidage assurent le positionnement des extrémités des bandes 24 et 25 dans leurs déplacements verticaux. Les bandes 24 et 25 sont constituées d'une seule pièce de matériau souple inextensible et résistant au cisaillement. Comme ces bandes sont entraînées sur toute la largeur des rouleaux 34 et 35, les chariots 39 et 40 sont maintenus constamment à la même hauteur, ce qui évite tout risque de coincement des bandes.

Des plaques d'étanchéité, dont la conception est à la portée de l'homme du métier, et qui n'ont pas été représentées pour ne pas surcharger le dessin, sont prévues de chaque côté des bandes pour éviter que des particules de produit de revêtement ne pénètrent dans le portique en s'infiltrant entre les bandes 24 et 25 et les rails 41.

La partie inférieure de la bande supérieure 24 est solidaire d'un rail 44, ici horizontal. De même, la partie supérieure de la bande inférieure 25 est solidaire d'un rail horizontal 45. Entre ces deux rails sont agencés deux seconds panneaux mobiles sous forme de deux secondes bandes souples 50 et 51, respectivement susceptibles de s'enrouler sur des rouleaux 60 et 61, ici verticaux et solidaires des chariots 39 et 40, en fonction des mouvements de suivi latéral du chariot 20, c'est-à-dire les mouvements de gauche à droite en considérant la figure 2. Ainsi, lesdites secondes bandes 50 et 51 coulissent dans la largeur desdites premières bandes 24 et 25. Ces mouvements sont pilotés par un moteur électrique 62. Ce dernier est couplé aux deux rouleaux 60 et 61, soit directement, soit par l'intermédiaire d'une courroie crantée, non représentée.

En d'autres termes, lesdites premières bandes 24 et 25 assurent le déplacement desdites secondes bandes 50 et 51 et par conséquent de la poutre 11, selon une direction verticale, perpendiculaire à la direction de déplacement latéral horizontal de la poutre 11, déplacement opéré par lesdites secondes bandes 50 et 51. L'ensemble des panneaux mobiles constitués par les bandes 24, 25, 50 et 51 constitue une partie d'une cloison de la cabine 10.

Les extrémités des bandes 50 et 51, qui sont les plus éloignées des rouleaux 60 et 62, sont solidaires du chariot 20 et définissent avec les rails 44 et 45 un passage de relativement faible section qui est traversé par la poutre 11. Un moteur électrique 63, solidaire du chariot, permet de déplacer la poutre 11, parallèlement à son plus grand axe et d'effectuer ainsi des mouvements de balayage avec les projecteurs 12. Un moteur non représenté, également solidaire du chariot 20 permet de donner à la poutre un mouvement de rotation autour de son plus grand axe et de positionner les projecteurs 12 de façon que ceux-ci soient toujours orientés sensiblement perpendiculairement à la surface à peindre.

Un dérouleur 65, partiellement représenté, contient les conduits de produit de revêtement (qui peuvent être au nombre de 48 pour 24 couleurs différentes), les conduits d'air, les conduits de solvant et les câbles haute-tension ou basse-tension dans le cas d'une projection électrostatique. L'espace situé à l'arrière des bandes souples, c'est-à-dire à l'extérieur de la cabine, n'est pas limité. L'accès à ce dérouleur 65 est donc relativement aisé et il n'évolue pas dans un volume exigu. De ce fait, les conduits de fluide ne risquent pas d'être déformés avec des rayons de courbure trop faibles susceptibles d'affecter le débit du produit de revêtement.

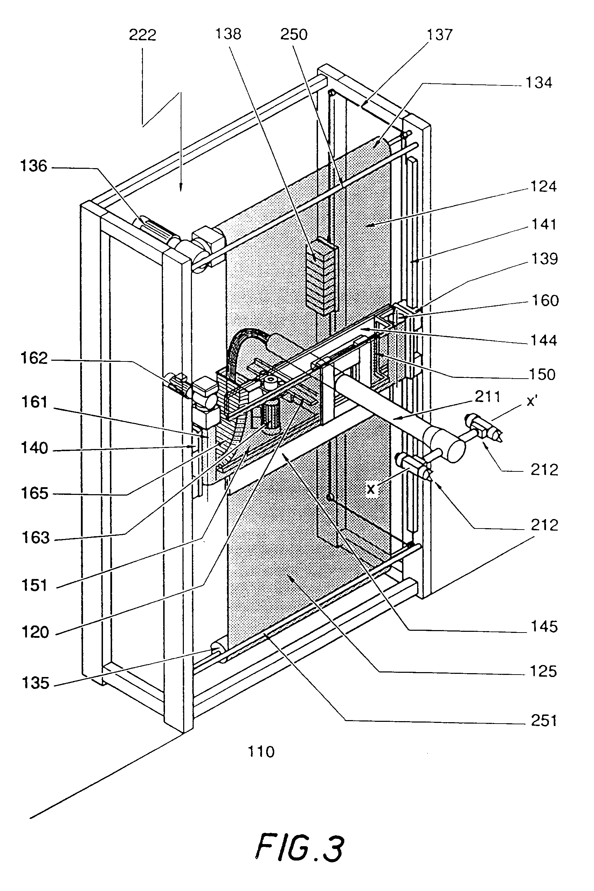

Sur la figure 3, le portique 222 constitue l'ossature d'une machine latérale conforme à l'invention. Les éléments de structure identiques à ceux de la machine de toit des figures 1 et 2 portent les mêmes références augmentées de 100 et ne seront pas décrits plus en détail. Un bras 211 (qui correspond à la poutre de la machine de toit) porte deux projecteurs pneumatiques 212, par exemple du type électrostatique. Ce bras est mobile en rotation autour de son plus grand axe grâce à une motorisation non représentée. Il est mobile verticalement et dans un mouvement de suivi latéral (c'est-à-dire ici horizontalement) grâce aux panneaux mobiles constitués desdites premières bandes 124 et 125 et desdites secondes bandes 150 et 151. Le bras 211 est également mobile en profondeur grâce à une glissière du chariot 120 pilotée par le moteur 163. Les projecteurs 212 sont mobiles autour de l'axe X-X'. La machine latérale qui vient d'être décrite possède donc cinq degrés de liberté tout en conservant une construction simple, pour un coût de fabrication relativement bas.

Le fonctionnement des éléments qui coopèrent pour déplacer les projecteurs 212, est donc pour l'essentiel, comparable aux éléments de déplacement de la poutre 11 de la figure 2; il ne sera donc pas décrit plus en détail.

Des moyens de nettoyage 250 et 251 sont prévus pour éviter l'encrassement des bandes 124 et 125 ou 150 et 151. Dans le cas d'une installation de projection de peinture, on peut prévoir des barres de dépôt de produit anti-adhérent et/ou des raclettes qui frottent en permanence sur les bandes 124 et 125. Ceci permet de nettoyer les bandes en permanence, y compris pendant les phases de projection. S'il s'agit d'une installation de poudrage, on peut prévoir des réglettes d'aspiration agencées au contact des bandes et qui débarrassent ces dernières des particules de poudre qui s'y sont déposées. Bien entendu, ces réglettes d'aspiration peuvent fonctionner en permanence pendant les phases de projection sans perturber les mouvements des projecteurs. Dans les deux cas, on peut prévoir, à des intervalles de temps réguliers, un mouvement d'amplitude maximum des bandes afin de permettre aux moyens de nettoyage 250 et 251 de traiter la surface complète des bandes 124 et 125. Des moyens analogues peuvent bien sûr être montés sur les chariots de guidage vertical 139 et 140 pour nettoyer les bandes 150 et 151.

Bien entendu, des moyens de nettoyage identiques sont utilisables sur une machine de toit conforme aux figures 1, 2 et 4 à 6.

Pour permettre un contrôle visuel par un opérateur des phases de projection, il est avantageux que le matériau des bandes 24 à 27, 50, 51, 124, 125, 150 et 151, soit transparent. Du fait que ces bandes constituent en réalité la cloison de la cabine de revêtement, l'opérateur peut voir à l'intérieur de la cabine sans devoir y pénétrer. Toutes les bandes n'ont pas besoin d'être en matériau transparent. Il suffit en fait qu'une de ces bandes soit itransparente.

Le matériau des bandes souples sera judicieusement choisi pour résister au solvant utilisé dans les installations de projection de peinture.

Dans les deux machines qui ont été décrites jusqu'à présent, lesdites premières bandes correspondent au mouvement vertical alors que lesdites secondes bandes correspondent au mouvement de suivi latéral, horizontal. L'agencement inverse rentre évidemment dans le cadre de l'invention. Il suffit de loger les moteurs 36, 62, 63 ou 136, 162, 163 et les rails 41 et 141 à des emplacements appropriés, ces modifications étant à la portée de l'homme du métier.

On peut aussi utiliser une seule bande à la place des bandes 24 et 25. Autrement dit, lesdits premiers panneaux mobiles désignent en fait les parties situées sensiblement dans un plan de part et d'autre du chariot 20 ou 120. Dans le cas d'une bande unique, il suffit de faire faire à ladite bande unique le même trajet que le câble 37 ou 137 et de lui faire porter le contrepoids 38. L'accès aux éléments de motorisation ne peut alors se faire que latéralement mais demeure possible. Une modification semblable est applicable aux bandes 50 et 51, aux bandes 124 et 125 et aux bandes 150 et 151.

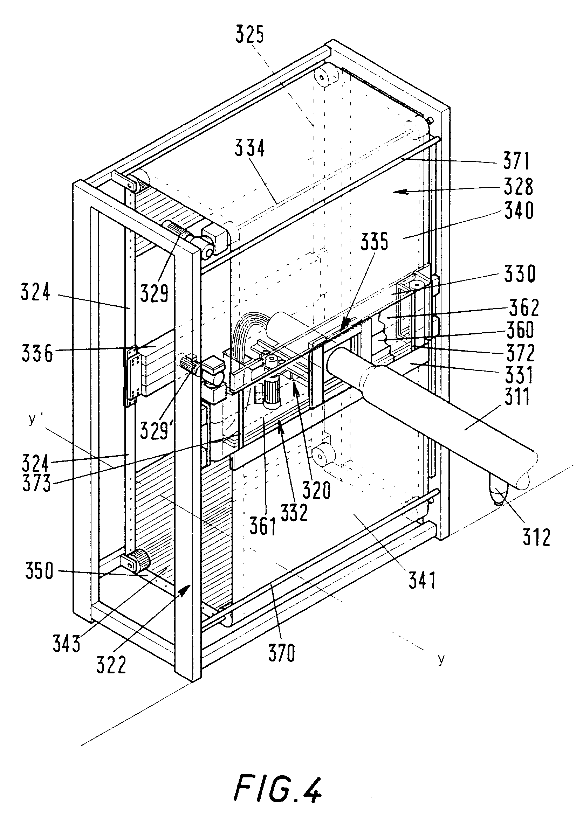

Dans le mode de réalisation de la figure 4, la poutre 311 est portée par deux chariots, dont seul le chariot 320 est visible. Chaque chariot est mobile comme dans les modes de réalisation précédents à l'intérieur d'un portique, le portique 322 sur la figure 4. Comme représenté, le chariot 320 est supporté et déplacé au moyen de liens souples constitués ici par des courroies 324, 325 parallèles et espacées latéralement dans le portique. Comme précédemment, la poutre peut être de section relativement faible car on peut charger ses extrémités pour éviter son fléchissement malgré le poids des pulvérisateurs 312. Cette faible section permet de ne pas perturber la ventilation dans la cabine au voisinage des projecteurs 312. Une face du portique 322 dite face avant est munie d'une ouverture 328 que peut balayer l'extrémité de la poutre 11 qui pénètre dans le portique, en fonction des mouvements d'altitude et de suivi latéral de la poutre. Ces mouvements sont respectivement obtenus grâce à deux moteurs 329 et 329'. Le moteur 329 est solidaire du portique et le moteur 329' est porté par un équipage mobile incluant le chariot 20. Comme dans le mode de réalisation de la figure 3, cet équipage mobile 332 est guidé verticalement le long de rails verticaux solidaires du portique 322.

Les deux liens souples ou courroies de traction 324 et 325 sont étroits et robustes et forment chacun une boucle fermée qui s'étend principalement le long de parois internes du châssis du portique qui sont sensiblement parallèles au trajet des objets à revêtir, c'est-à-dire les parois avant, arrière, supérieure et inférieure. Leurs extrémités respectives sont solidaires de deux rails 330 et 331, parallèles évoluant verticalement sensiblement dans la face avant. Ces deux rails sont disposés de part et d'autre de l'équipage mobile 332 et du chariot 320. Ce dernier coulisse le long de ces rails. Un axe de synchronisation 334 relie les poulies d'entraînement des courroies 324 et 325. Elles permettent d'assurer le déplacement en altitude du système 335 de suivi latéral des objets à revêtir, système constitué principalement par les rails et le chariot. Un contrepoids 336 est déplacé en altitude sur la face arrière du portique 322. Il est fixé sensiblement au milieu des courroies 324 et 325 ce qui garantit une bonne tension des courroies et l'équilibrage de l'ensemble. En effet, les courroies 324 et 325 forment des boucles fermées et le contrepoids 336 est solidaire des deux courroies, donc centré par rapport à l'axe de symétrie Y-Y' du portique 322. Cette stabilité évite que les courroies ou le système 335 ne se bloquent lors des déplacements en altitude du chariot 320. Bien entendu, les courroies pourraient être remplacées par d'autres liens souples analogues, tels que des câbles, des chaînes, etc...

Grâce à ce positionnement des courroies 324 et 325, la vitesse de balayage vertical de la poutre 311 peut être pilotée avec précision par l'alimentation électrique du moteur 329. En effet, aucune courroie ne s'enroule autour d'un axe moteur, ce qui évite des variations de vitesse en fonction de l'épaisseur de courroie déjà enroulée.

Les courroies de traction 324 et 325 sont prévues dans un matériau pouvant résister aux efforts en cause. Elles sont éventuellement crantées.

Sur les courroies de traction 324 et 325 sont fixés des premiers panneaux mobiles d'étanchéité 340 et 341, ici en matériau souple résistant aux solvants utilisés dans l'installation. Les panneaux 340 et 341, sous forme de bandes, ont une surface équivalente à l'ouverture 328 qu'ils obturent. Ils protègent ainsi l'intérieur du portique, les courroies 324 et 325 et les autres équipements situés dans le portique, des projections intempestives de produit de revêtement. En particulier, il n'est pas nécessaire que les courroies de traction 324 et 325 soient fabriquées à partir d'un matériau résistant aux solvants car elles ne sont pas en contact direct avec l'intérieur de la cabine. Les courroies 324, 325 et le système 330 sont situés dans le portique et sont séparés de la cabine par lesdits premiers panneaux 340, 341 souples.

Par rapport aux modes de réalisation précédents, la dissociation entre la fonction d'entraînement réalisée par les courroies de traction 324 et 325 et la fonction d'étanchéité réalisée par les panneaux 340 et 341, permet d'optimiser, dans chaque cas, les matériaux utilisés.

Les panneaux d'étanchéité 340 et 341 peuvent comporter, sur leur face arrière, c'est-à-dire celle qui est tournée du côté de l'intérieur du portique 322, des lattes 343 de renfort qui sont parallèles aux axes d'enroulement des courroies 324 et 325. Dans ce cas, lesdits panneaux sont rigides parallèlement au trajet des objets à revêtir, ce qui leur évite de "flotter" et de produire du bruit. Ils sont en revanche souples dans leur autre direction, ce qui leur permet de suivre le trajet des courroies 324 et 325 au moins sur une partie de leur déplacement. Il n'est pas nécessaire d'enrouler les panneaux 340 et 341 sur eux-mêmes, ce qui est avantageux du fait que ces panneaux sont parfois souillés de produit de revêtement. La face arrière des panneaux 340 et 341 demeure propre en permanence.

Selon une variante non représentée, les panneaux 340 et 341 peuvent être en matériau élastique, tel que par exemple de l'élastomère et tendus entre les courroies 324 et 325. De cette façon, ils ne peuvent ni "flotter", ni faire de bruit, les lattes sont alors superflues.

Selon une autre variante avantageuse, les panneaux 340 et 341 sont fixés de façon amovible sur les courroies 324 et 325 par exemple au moyen de rivets 350 ou accrochés par un système connu de pièces de tissu à boucles et griffes coopérantes. De la sorte, il est possible de changer les panneaux 340 et 341 en fonction de leur degré de salissure ou à intervalles de temps réguliers et ce, en un temps relativement court puisqu'il n'est pas nécessaire de démonter le chariot 320, l'équipage mobile 332 ou le système 335, qui restent en place, supportés par les courroies de traction 324 et 325.

La fonction d'étanchéité desdits premiers panneaux 340 et 341 est prévue seulement pour la face avant du portique 322, c'est-à-dire la face située du côté des objets à revêtir. Il est possible de limiter les panneaux 340 et 341 en hauteur pour ménager, de part et d'autre du contrepoids 336 un espace permettant l'accès au chariot 320 par l'arrière du portique 322, c'est-à-dire par l'extérieur de la cabine.

Un arrangement semblable à celui qui vient d'être décrit est prévu pour l'entraînement du système de suivi latéral 335. Une courroie de traction 360 couplée au moteur 329' et qui entraîne le chariot 320 est recouverte de deux seconds panneaux d'étanchéité 361 et 362 situés de part et d'autre de la fenêtre de passage de l'extrémité de poutre 311. Au vu des dimensions relativement faibles des panneaux 361 et 362, ceux-ci ne sont en général pas lattés. L'ensemble des panneaux 340, 341, 361 et 362 forme une partie de la cloison de la cabine. La courroie 360 constitue donc un lien souple formant des moyens de transmission de mouvement mécaniquement interposés entre des moyens moteurs (le moteur 329') et le chariot 320 supportant l'extrémité de la poutre. Cette courroie jouxte les seconds panneaux au voisinage du plan où il se déplace, c'est-à-dire la face avant du portique, si on considère la figure 4.

Des plaques d'étanchéité, dont la conception est à la portée de l'homme du métier et qui n'ont pas été représentées pour ne pas surcharger le dessin, évitent que des particules de peinture ne circulent entre les panneaux 340, 341, 361 et 362 et les bords de l'ouverture 328. De plus, l'intérieur du portique peut être maintenu en légère surpression pour éviter toute contamination des équipements qu'il contient. Dans ce cas, ledit portique est fermé vers l'arrière, par exemple au moyen d'une porte supplémentaire ou par le fait que les panneaux 340 et 341 sont fixés sur les courroies 324 et 325 jusqu'au niveau du contrepoids 336 s'étendant entre les deux courroies.

De manière analogue à ce qui est décrit en référence à la figure 3, des moyens de nettoyage 370, 371, 372 et 373 sont prévus pour éviter l'encrassement des panneaux 340, 341, 361 et 362.

Selon une variante non représentée, les panneaux souples 340 et 341 peuvent être solidaires des courroies 324 et 325 seulement au voisinage des rails 330 et 331. Ils sont alors plaqués sur les courroies 324 et 325 sur la face avant du portique mais peuvent s'en écarter dès que les courroies 324 et 325 deviennent horizontales pour rejoindre la face arrière du portique. Les panneaux ainsi libérés peuvent par exemple suivre un autre trajet dans le plafond et dans le plancher de l'installation et être nettoyés en permanence par un système approprié.

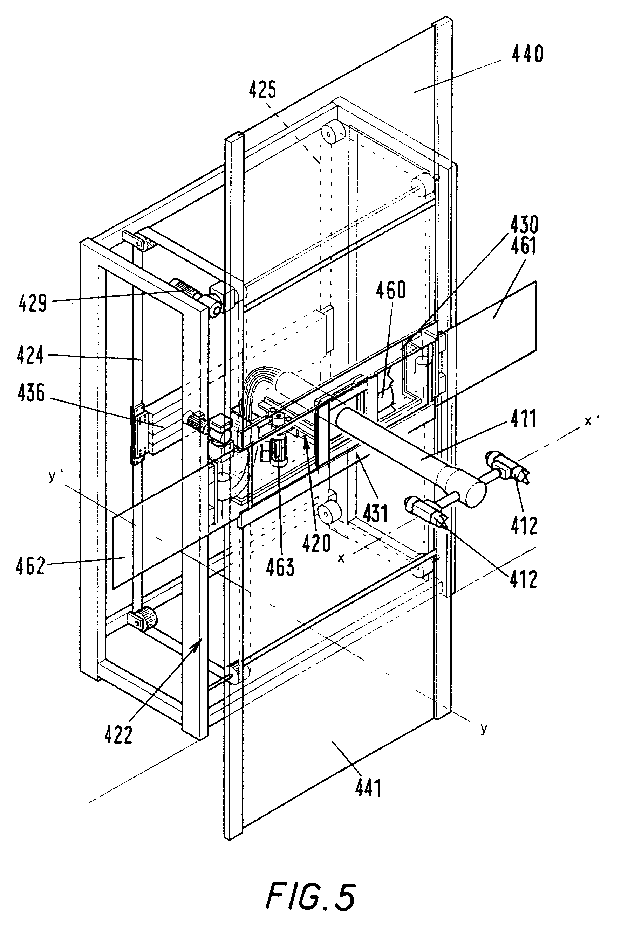

La figure 5 illustre une autre machine latérale conforme à l'invention. Les éléments correspondant à ceux de la machine de toit de la figure 4, portent les mêmes références augmentées de 100. Ils ne seront donc pas décrits en détail. Leur fonctionnement est semblable.

Un bras 411 portant deux projecteurs pneumatiques 412, par exemple du type électrostatique, est mobile en rotation autour de son plus grand axe grâce à une motorisation non représentée, verticalement et dans un mouvement de suivi latéral grâce aux courroies 424, 425 d'une part et 460 d'autre part. Il est aussi mobile en profondeur grâce au mouvement du chariot 420 piloté par le moteur 463. Les projecteurs peuvent être mobiles, quant à eux, autour de l'axe X-X'.

Les panneaux 440 et 441, qui sont fixés sur les courroies 424 et 425 à proximité des rails 430 et 431, sont dans cet exemple, rigides. Des emplacements correspondants sont aménagés dans le plafond et dans le plancher de l'installation pour recevoir ces panneaux pendant les mouvements d'altitude du bras 411. Du fait de la localisation des panneaux rigides 440 et 441 exclusivement dans le plan de la face avant du portique 422, l'accès à l'intérieur de celui-ci est encore facilité.

De même, lesdits seconds panneaux d'étanchéité 461 et 462 peuvent aussi être installés suivant ce principe et pénétrer dans des emplacements latéraux correspondants dans la paroi de la cabine.

Pour permettre un contrôle visuel par un opérateur des phases de projection, on peut choisir le matériau des panneaux d'étanchéité transparent. Comme ces panneaux constituent de fait la cloison de la cabine de revêtement, un opérateur peut voir à l'intérieur de la cabine sans avoir à y pénétrer. Il suffit qu'un seul de ces panneaux soit transparent.

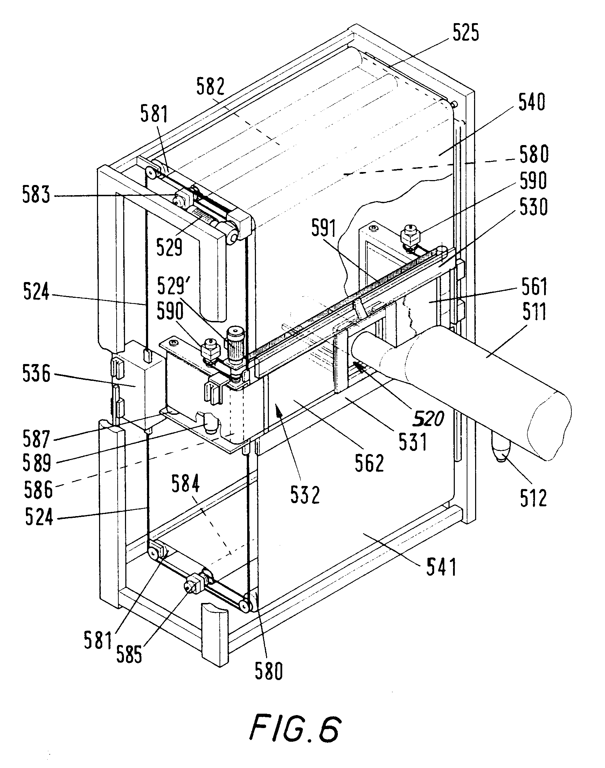

Dans le mode de réalisation de la figure 6, qui décrit à nouveau une machine de toit, les éléments de structure analogues à ceux du dispositif de la figure 5 portent les mêmes références augmentées de 100. Ils ne seront pas décrits en détail. Lesdits premiers panneaux 540 et 541 et lesdits seconds panneaux 561 et 562 sont des bandes de matériau souple. Ainsi, chaque premier panneau 540, 541 est constitué par une bande souple engagée sur deux rouleaux de guidage 580, 581 d'axe parallèle au plan de la face avant du portique. Un bord du panneau 540 est fixé au rail 530 et son bord ou extrémité opposé est fixé à un rouleau d'enroulement 582 motorisé. Ce rouleau d'enroulement, actionné par un moteur électrique 583, est agencé parallèlement audit rouleau de guidage et est situé sensiblement entre eux. De même, un bord du panneau 541 est fixé au rail 531 et son bord opposé est fixé à un rouleau d'enroulement 584 actionné par un moteur électrique 585. Un agencement comparable est prévu pour les seconds panneaux 561 et 562. Chaque second panneau est constitué par une bande souple et celle-ci est engagée sur deux rouleaux de guidage 586, 587 agencés sur un équipage mobile 532 solidaire du chariot et mobile verticalement dans le portique grâce aux liens souples 524, 525 (ici des chaînes) entraînés par le moteur 529. Les deux rouleaux de guidage 586, 587 sont disposés le long d'un côté du portique. L'extrémité de chaque second panneau opposée au chariot est elle-même fixée à un rouleau d'enroulement 589 motorisé. Ce rouleau d'enroulement, actionné par un moteur 590 est agencé parallèlement auxdits rouleaux de guidage, entre ceux-ci.

Comme dans les deux modes de réalisation précédents, le déplacement du chariot est assuré par des liens souples, en l'occurrence ici les chaînes 524, 525, lesquelles sont espacées au voisinage des deux extrémités latérales du portique tandis que le déplacement desdits seconds panneaux est assuré par au moins un lien souple constituant des moyens de transmission de mouvement, mécaniquement interposés entre un moteur 529' et le chariot. Ce lien souple est ici constitué d'une courroie crantée 591 fixée au chariot.

Il ressort clairement de la description qui précède en référence à la figure 6, que la disposition desdits premiers et seconds panneaux s'enroulant au voisinage des faces inférieure et supérieure d'une part, et des faces latérales d'autre part du portique, permet de dégager la face arrière de la machine, ce qui facilite l'accès des équipements situés dans le portique. Cet accès est encore facilité par le fait que le contrepoids ne s'étend plus sur toute la largeur du châssis.

## Revendications

1. Dispositif de projection de produit de revêtement formant machine de toit du type comportant une poutre (11) portant au moins un projecteur (12) mobile dans une zone de projection par rapport à des objets à recouvrir situés dans cette zone et deux portiques latéraux (22) comportant un chariot (20) mobile, supportant ladite poutre, du type comportant des premiers panneaux mobiles (24, 25) dans un plan vertical suivant une première direction pour obturer une partie d'une face dudit portique du côté de ladite zone de projection et comportant deux bords parallèles fixés de part et d'autre dudit chariot, caractérisé en ce qu'il comporte en outre des seconds panneaux mobiles (50, 51) sensiblement dans le même plan et se déplaçant suivant une seconde direction perpendiculaire à ladite première direction pour obturer une autre partie de ladite face dudit portique s'étendant entre lesdits bords parallèles desdits premiers panneaux et en ce que l'ensemble desdits panneaux forme une partie de la cloison d'une cabine de revêtement.

2. Dispositif de projection de produit de revêtement formant machine latérale du type comportant un élément (211) portant au moins un projecteur (212) mobile dans une zone de projection par rapport à des objets à recouvrir situés dans cette zone et un portique latéral (222) comportant un chariot (120) mobile, supportant ledit élément, du type comportant des premiers panneaux mobiles (124, 125) dans un plan vertical suivant une première direction pour obturer une partie d'une face dudit portique du côté de ladite zone de projection et comportant deux bords parallèles fixés de part et d'autre dudit chariot, et, en outre, des seconds panneaux mobiles (150, 151) sensiblement dans le même plan et se déplaçant suivant une seconde direction, perpendiculaire à ladite première direction pour obturer une autre partie de ladite face dudit portique s'étendant entre lesdits bords parallèles desdits premiers panneaux, l'ensemble desdits panneaux formant une partie de la cloison d'une cabine de revêtement.

3. Dispositif de projection selon la revendication 1 ou 2, caractérisé en ce que lesdits seconds panneaux (50, 51-150, 151) coulissent dans la largeur desdits premiers panneaux (24, 25-124, 125) entre les bords parallèles précités.

4. Dispositif selon l'une des revendications 1 à 3, caractérisé en ce que lesdits premiers panneaux (24, 25, 124, 125) sont des bandes souples constituant des moyens de transmission de mouvement, mécaniquement interposés entre des moyens moteurs (36, 136) et des rails entre lesquels se déplacent lesdits seconds panneaux.

5. Dispositif selon la revendication 4, caractérisé en ce que lesdits seconds panneaux (50, 51, 150, 151) sont des bandes souples et constituent des moyens de transmission de mouvement mécaniquement interposés entre des moyens moteurs (62) et ledit chariot (20) supportant ledit élément.

6. Dispositif selon l'une des revendications précédentes, caractérisé en ce que des bandes souples précitées (24, 25, 124, 125, 50, 51, 150, 151) s'enroulent autour de rouleaux (34, 35, 134, 135, 60, 61, 160, 161) perpendiculaires à leurs directions de déplacement, respectivement.

7. Dispositif selon l'une des revendications 1 à 6, caractérisé en ce qu'il comporte des liens souples (324, 325) tels que courroies, câbles, chaînes ou analogues constituant des moyens de transmission de mouvement, mécaniquement interposés entre des moyens moteurs (329) et des rails (330, 331) entre lesquels se déplacent lesdits seconds panneaux (340, 341), lesdits liens souples jouxtant lesdits premiers panneaux au moins au voisinage du plan précité où ils se déplacent.

8. Dispositif selon l'une des revendications 1 à 7, caractérisé en ce qu'il comporte au moins un lien souple (360) tel que courroie, câble, chaîne ou analogue, constituant des moyens de transmission de mouvement mécaniquement interposés entre des moyens moteurs (329') et ledit chariot (320) supportant ledit élément, ledit lien souple jouxtant lesdits seconds panneaux au moins au voisinage du plan précité où ils se déplacent.

9. Dispositif selon la revendication 7, caractérisé en ce qu'un tel lien souple (324, 325) forme une boucle fermée qui s'étend essentiellement le long de parois internes dudit portique (322) qui sont sensiblement parallèles au trajet des objets à revêtir.

10. Dispositif selon l'une des revendications 7 ou 8, caractérisé en ce qu'un tel panneau précité (440, 441, 461, 462) pénètre dans un emplacement ménagé dans le plafond, le plancher ou la paroi d'une cabine de projection.

11. Dispositif selon la revendication 10, caractérisé en ce que ce panneau est rigide.

12. Dispositif selon l'une des revendications 7 à 9, caractérisé en ce qu'un tel panneau est armé de lattes (343).

13. Dispositif selon l'une des revendications 7 à 12, caractérisé en ce qu'un tel panneau (340, 341, 360, 361) est fixé de manière amovible à au moins un lien souple précité.

14. Dispositif selon l'une des revendications 7 à 12, caractérisé en ce qu'un tel panneau est fixé audit lien souple de telle manière qu'il puisse être démonté alors que ledit lien souple est maintenu en position.

15. Dispositif de projection selon l'une des revendications 1 à 8, caractérisé en ce que chaque premier panneau (540, 541) étant constitué par une bande souple, celle-ci est engagée sur deux rouleaux de guidage (580, 581) d'axe parallèle audit plan, agencés le long d'un côté dudit portique et en ce que son extrémité opposée audit chariot (520) est fixée à un rouleau d'enroulement (582) motorisé, ledit rouleau d'enroulement étant agencé parallèlement auxdits rouleaux de guidage sensiblement entre ceux-ci.

16. Dispositif selon une des revendications 1 à 8, et 15, caractérisé en ce que chaque second panneau (561, 562) étant constitué par une bande souple, celle-ci est engagée sur deux rouleaux de guidage (586, 587) agencés le long d'un côté dudit portique et en ce que son extrémité opposée audit chariot est fixée à un rouleau d'enroulement (589) motorisé, ledit rouleau d'enroulement étant agencé parallèlement audit rouleau de guidage sensiblement entre ceux-ci.

17. Dispositif de projection selon l'une des revendications précédentes, caractérisé en ce que l'élément précité portant ledit projecteur est monté mobile sur ledit chariot, en rotation autour de son plus grand axe et/ou en translation le long de son plus grand axe.

18. Dispositif selon l'une des revendications précédentes, caractérisé en ce que des moyens de nettoyage (250, 251) des panneaux sont disposés au contact desdits panneaux.

19. Dispositif selon la revendication 18, caractérisé en ce lesdits moyens de nettoyage sont aptes à fonctionner pendant les phases de projection.

20. Dispositif selon l'une des revendications précédentes, caractérise en ce qu'au moins l'un desdits panneaux est en matériau transparent.

## Claims

1. Coating product projecting device forming an overhead machine, which device comprises a beam (11) carrying at least one nozzle (12) which is movable within a projection zone relative to the objects to be covered disposed in that zone and two lateral frame members (22) carrying a mobile carriage (20) supporting said element, of the type comprising first panels (24,25) movable in a vertical plane following a first direction filling a part of the face of said frame adjacent to said projection zone and comprising two parallel edges fixed to both sides of said carriage, characterised in that it comprises in addition second movable panels (50,51) arranged substantially in the same plane and which are movable in a second direction perpendicular to the first direction to fill another part of said face of said frame extending between said parallel edges of the said first panel and in that the whole of said panels form a part of the bulkhead of a coating station.

2. Coating product projecting device forming a side-mounted machine, which comprises an element (211) carrying at least one nozzle (212) movable within a projection zone relative to the objects to be covered disposed in that zone and a lateral frame member (222) carrying a mobile carriage (120) supporting said element, of the type comprising first panels (124,125) movable in a vertical plane following a first direction filling a face of said frame adjacent said projection zone and comprising two parallel edges fixed to both sides of said carriage, characterised in that it comprises in addition second movable panels (150,151) arranged in substantially the same plane and movable in a second direction perpendicular to said first direction to fill another part of said face of said frame extending between said parallel edges and said first panels and in that the whole of said panels form a part of the bulkhead of a coating station.

3. Projection device according to claim 1 or 2, characterised in that said second panels (50,51-150,151) are situated in the width of said first panels (24,25-124,125) between the aforementioned parallel edges.

4. Device according to any of claims 1 to 3, characterised in that said first panels (24,25-124,125) are flexible strips which comprise means of mechanically transmitting movement, interposed between drive means (36,136) and rails between which said second panels are displaced.

5. Device according to claim 4, characterised in that said second panels (50,51,150,151) are flexible strips and comprise means of mechanically transmitting movement interposed between drive means (62) and said carriage (20) supporting said element.

6. Device according to any preceding claim, characterised in that the aforementioned flexible strips (24,25,124,125,50,51,150,151) are rolled around rollers (34,35,134,135,60,61,160,161) perpendicular to the directions in which they are respectively displaced.

7. Device according to any of claims 1 to 6, characterised in that it consists of flexible connectors (324,325) such as straps, cables, chains or the like comprising means of mechanically transmitting movement, interposed between drive means (329) and the rails (330,331) between which said second panels are displaced (340,341), said flexible connectors tilting said first panels at least in close proximity to said plane where they are displaced.

8. Device according to any of claims 1 to 7, characterised in that it comprises at least one flexible connector (360) such as strap, cable, chain or the like, comprising means of mechanically transmitting movement, interposed between the drive means (329) and said carriage (320) supporting said element, said flexible connector tilting said second panel at least in close proximity to said plane where they are displaced.

9. Device according to claim 7, characterised in that one such flexible connector (324,325) forms a closed ring which extends substantially along the inside length of said frames (322) which are substantially parallel to the path of the objects to be coated.

10. Device according to one of claims 7 or 8, characterised in that one such aforementioned panel (440,441,461,462) enter into a site in the ceiling, the floor or the inside wall of the coating station.

11. Device according to claim 10, characterised in that the panel is rigid.

12. Device according to any of claims 7 to 9, characterised in that one such panel is equipped with strips (343).

13. Device according to any of claims 7 to 12, characterised in that one such panel (340,341,360,361) is removably fixed to at least one of the aforementioned flexible connectors.

14. Device according to any of claims 7 to 12 characterised in that one such panel is fixed to said flexible connector in a way in which it can be removed whilst the position of said flexible connector is maintained.

15. Projection device according to any of claims 1 to 8, characterised in that each first panel (540,541), comprising a flexible strip, is itself engaged in two guiding rolls (580,581) in an axis parallel to said plane, the length of part of said frame and in which its end is opposed to said carriage (52) which is fixed to a motorised rolling roll (582), said rolling roll extending parallel to said guiding rolls substantially between those.

16. Device according to any of claims 1 to 8 and 15, characterised in that each of second panels (561,562) comprises a flexible strip, which is engaged on two guiding rolls (586,587) along the length of part of said frame and in which its end opposed to said carriage is fixed to a motorized rolling roll (589), said rolling roll extending parallel to said guiding rolls substantially between those.

17. Device according to any preceding claim, characterised in that the aforementioned element carries said nozzle and is upwardly mobile on said carriage, on rotation about its greatest axis and/or on translation along the length of the greatest axis.

18. Device according to any preceding claim, characterised in that the means for cleaning (250,251) the panels are arranged in contact with said panels.

19. Device according to claim 18, characterised in that said cleaning means are adapted to work during the projection phases.

20. Device according to any preceding claim, characterised in that at least one of said panels is of transparent material.

## Patentansprüche

1. Vorrichtung zum Sprühen von Beschichtungsmaterial als Überkopfmaschine mit einem Balken (11), der mindestens eine mobile Sprühanordnung (12) in einer Sprühzone in bezug auf die zu beschichtenden Gegenstände trägt, die in dieser Zone angeordnet sind, und zwei seitlichen Portalrahmen (22), die einen den Balken tragenden mobilen Wagen (20) umfassen und die erste, in einer vertikalen Ebene entsprechend einer ersten Richtung bewegliche Blenden (24,25), um einen einen Teil einer Fläche des Portalrahmens an der Seite der Sprühzone zu verschließen, sowie zwei parallele Ränder aufweisen, die beidseitig des Wagens befestigt sind,
**dadurch gekennzeichnet,**
daß darüber hinaus zweite bewegliche Blenden (50,51) im wesentlichen in der gleichen Ebene vorgesehen sind, die sich entsprechend einer zweiten Richtung senkrecht zur ersten Richtung verschieben, um einen anderen Teil der Fläche des Portalrahmens zu verschließen, die sich zwischen den parallelen Rändern der ersten Blenden erstreckt, und daß die Gesamtheit der Blenden einen Teil der Trennwand einer Beschichtungskabine bildet.

2. Vorrichtung zum Sprühen von Beschichtungsmaterial, ausgebildet als Seitenmaschine, mit einem Element (211), das mindestens eine mobile Sprühanordnung (212) in einer Sprühzone in bezug auf die zu beschichtenden Gegenstände trägt, die in dieser Zone angeordnet sind, und einen seitlichen Portalrahmen (222), der einen das Element tragenden mobilen Wagen (120) umfaßt und der erste, in einer vertikalen Ebene entsprechend einer ersten Richtung bewegliche Blenden (124,125), um einen Teil der Fläche des Portalrahmens an der Seite der Sprühzone zu verschließen, und der zwei parallele Ränder aufweist, die beidseitig des Wagens befestigt sind, und darüber hinaus zweite bewegliche Blenden (150,151) im wesentlichen in der gleichen Ebene vorgesehen sind, die sich entsprechend einer zweiten Richtung senkrecht zur ersten Richtung verschieben, um einen anderen Teil der Fläche des Portalrahmens zu verschließen, die sich zwischen den parallelen Rändern der ersten Blenden erstreckt, und wobei die Gesamtheit der Blenden einen Teil der Trennwand einer Beschichtungskabine bildet.

3. Vorrichtung nach Anspruch 1 oder 2, dadurch gekennzeichnet, daß die zweiten Blenden (50,51-150,151) in der Breite der ersten Blenden (24,25-124,125) zwischen den zuvor erwähnten Rändern gleiten.

4. Vorrichtung nach einem der Ansprüche 1 bis 3, dadurch gekennzeichnet, daß die ersten Blenden (24,25,124,125) weiche Bänder sind, die Mittel zur Übertragung von Bewegung bilden und mechanisch zwischen einer Motoranordnung (36,136) und Schienen angeordnet sind, zwischen denen sich die zweiten Blenden verschieben.

5. Vorrichtung nach Anspruch 4, dadurch gekennzeichnet, daß die zweiten Blenden (50,51,150,151) weiche Bänder sind und Mittel zur Bewegungsübertragung bilden, die mechanisch zwischen einer Motoranordnung (62) und den das Element tragenden Wagen (20) angeordnet sind.

6. Vorrichtung nach einem der vorhergehenden Ansprüche, dadurch gekennzeichnet, daß die zuvor erwähnten weichen Bänder (24,25,124,125,50,51,150,151) sich um Rollen (34,35,134,135,60,61,160,161) einrollen, die senkrecht zu ihrer Verschiebungsrichtung angeordnet sind.

7. Vorrichtung nach einem der Ansprüche 1 bis 6, dadurch gekennzeichnet, daß sie weiche Verbindungsglieder (324,325), wie Treibriemen, Kabel, Ketten oder dergleichen umfaßt, die Mittel zur Übertragung der Bewegung bilden, und die mechanisch zwischen einer Motoranordnung (329) und schienen (330,331) angeordnet sind, zwischen denen sich die zweiten Blenden (340,341) verschieben, wobei die weichen Verbindungsglieder mit den ersten Blenden mindestens in der Nähe der zuvor erwähnten Ebene, in der sie sich verschieben, übereinanderliegen.

8. Vorrichtung nach einem der Ansprüche 1 bis 7, dadurch gekennzeichnet, daß sie mindestens ein weiches Verbindungsglied (360), wie ein Treibriemen, Kabel, eine Kette oder dergleichen umfaßt, das Mittel zur Übertragung der Bewegung bildet, und mechanisch zwischen einer Motoranordnung (329') und dem das Element tragenden Wagen (320) angeordnet ist, wobei das weiche Verbindungsglied mit den zweiten Blenden mindestens in der Nähe der zuvor erwähnten Ebene, in der sie sich verschieben, übereinanderliegt.

9. Vorrichtung nach Anspruch 7, dadurch gekennzeichnet, daß ein solches weiches Verbindungsglied (324,325) eine geschlossene Schleife bildet, die sich im wesentlichen entlang der Innenwände des Portalrahmens (322) erstreckt, die im wesentlichen parallel zum Weg der zu beschichtenden Gegenstände sind.

10. Vorrichtung nach einem der Ansprüche 7 oder 8, dadurch gekennzeichnet, daß eine solche zuvor erwähnte Blende (440,441,461,462) in eine in der Decke, dem Boden oder der Wand einer Spritzkabine ausgearbeitete Ausnehmung eingreift.

11. Vorrichtung nach Anspruch 10, dadurch gekennzeichnet, daß eine solche zuvor erwähnte Blende steif ist.

12. Vorrichtung nach einem der Ansprüche 7 bis 9, dadurch gekennzeichnet, daß eine solche Blende mit Latten (343) armiert ist.

13. Vorrichtung nach einem der Ansprüche 7 bis 12, dadurch gekennzeichnet, daß eine solche Blende (340,341,360,361) nicht lösbar an mindestens einem zuvor erwähnten weichen Verbindungsglied befestigt ist.

14. Vorrichtung nach einem der Ansprüche 7 bis 12, dadurch gekennzeichnet, daß eine solche Blende an dem weichen Verbindungsglied derart befestigt ist, daß sie demontiert werden kann, während das weiche Verbindungsglied in Position gehalten wird.

15. Vorrichtung nach einem der Ansprüche 1 bis 8, dadurch gekennzeichnet, daß jede erste Blende (540,541) als ein weiches Band ausgebildet ist, das mit zwei Führungsrollen (580,581) mit zu der Ebene parallelen Achsen in Kontakt ist, die längs einer Seite des Portalrahmens angeordnet sind, und daß sein zum Wagen (520) entgegengesetztes Ende an einer motorisierten Aufrollrolle (582) befestigt ist, wobei die Aufrollrolle parallel zu den Führungsrollen im wesentlichen zwischen diesen angeordnet ist.

16. Vorrichtung nach einem der Ansprüche 1 bis 8 und 15, dadurch gekennzeichnet, daß jede zweite Blende (561,562) als weiches Band ausgebildet ist, das mit zwei Führungsrollen (586,587) in Kontakt ist, die längs einer Seite des Portalrahmens angelenkt sind, und daß sein zum Wagen entgegengesetztes Ende an einer motorisierten Aufrollrolle (589) befestigt ist, wobei die Aufrollrolle parallel zu der Führungsrolle im wesentlichen zwischen diesen angeordnet ist.

17. Vorrichtung nach einem der vorhergehenden Ansprüche, dadurch gekennzeichnet, daß das die Spritzanordnung tragende zuvor erwähnte Element beweglich auf dem Wagen zur Drehung um seine größte Achse und/oder in Translation längs seiner größten Achse angeordnet ist.

18. Vorrichtung nach einem der vorhergehenden Ansprüche, dadurch gekennzeichnet, daß eine Reinigungsvorrichtung (250,251) der Blenden in Kontakt mit diesen angeordnet ist.

19. Vorrichtung nach Anspruch 18, dadurch gekennzeichnet, daß die Reinigungsvorrichtung dazu geeignet ist, während der Sprühphasen zu arbeiten.

20. Vorrichtung nach einem der vorhergehenden Ansprüche, dadurch gekennzeichnet, daß mindestens eine der Blenden aus einem transparenten Material besteht.
